(19) Europäisches Patentamt
European Patent Office
Office européen des brevets

(11) **EP 3 855 277 B1**

(12) **EUROPÄISCHE PATENTSCHRIFT**

(45) Veröffentlichungstag und Bekanntmachung des Hinweises auf die Patenterteilung:
**21.02.2024  Patentblatt 2024/08**

(21) Anmeldenummer: **20209120.3**

(22) Anmeldetag: **23.11.2020**

(51) Internationale Patentklassifikation (IPC):
**G05D 11/13** [(2006.01)]

(52) Gemeinsame Patentklassifikation (CPC):
**G05D 11/135; B01F 23/49; F04B 13/00; F04B 23/02; F04B 23/04; F04B 23/06; F04B 43/04;**
B01F 35/831; F04B 43/067

(54) **VERFAHREN ZUM MISCHEN WÄSSRIGER LÖSUNGEN**

PROCESS FOR MIXING AQUEOUS SOLUTIONS

PROCÉDÉ POUR MÉLANGER DES SOLUTIONS AQUEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2020  DE 102020101610**

(43) Veröffentlichungstag der Anmeldung:
**28.07.2021  Patentblatt 2021/30**

(73) Patentinhaber: **ProMinent GmbH**
**69123 Heidelberg (DE)**

(72) Erfinder: **Weibler, Wolfgang**
**68542 Heddesheim (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
**DE-A1-102006 060 578      DE-U1-202005 013 090**
**US-A1- 2005 008 554**

**Beschreibung**

Die vorliegende Erfindung betrifft ein Verfahren zum Mischen wässriger Lösungen, eine Vorrichtung zur Durchführung dieses Verfahrens sowie die Verwendung von Dosiereinrichtungen mit integrierter Dosierüberwachung und Hublängenregelung in einer Anlage zum Mischen wässriger Lösungen.

Zur exakten Dosierung kleinerer Mengen von wässrigen Lösungen ist es bekannt, Dosiereinrichtungen zu benutzen. Anwendung finden solche Dosiereinrichtungen beispielsweise um wässrige Lösungen chemischer Stoffe einem Mischbehälter zuzuführen. Die Dosiereinrichtung weist eine Dosierkammer auf, in der ein Verdrängungselement zwischen zwei Positionen hin und her bewegbar ist, wobei das Volumen der Dosierkammer in der einen Position größer als in der anderen Position ist.

Eine solche Dosiereinrichtung kann beispielsweise eine Membrandosierpumpe sein. Als Verdrängungselement dient hier eine bewegliche Membran. Die Dosierkammer ist im Betrieb über ein Saugrückschlagventil mit einer Saugleitung und über einem Druckrückschlagventil mit einer Druckleitung verbunden. Sowohl Saugrückschlagventil als auch Druckrückschlagventil können Teil der Dosiereinrichtung sein. Sie können jedoch auch anlagenseitig bereitgestellt werden.

Wird die Membran in die Position bewegt, in der das Volumen der Dosierkammer am größten ist, wird Fördermedium über das Saugventil aus der Saugleitung in die Dosierkammer gesaugt. Im Anschluss daran wird die Membran in Richtung derjenigen Position bewegt, in der das Volumen der Dosierkammer am geringsten ist. Dadurch wird das Saugrückschlagventil geschlossen, worauf der Druck in der Dosierkammer ansteigt bis das Druckrückschlagventil öffnet und das sich in der Dosierkammer befindliches Fördermedium in die Druckleitung gedrückt wird.

Die Dosiereinrichtung weist weiterhin einen Aktor zum Antreiben des Verdrängungselementes auf, welcher einen Aktoreingang für ein elektrisches Ansteuersignal aufweist und derart aufgebaut ist, dass ein am Aktoreingang anliegendes elektrisches Ansteuersignal in eine mechanische Bewegung umgesetzt wird.

Im Falle einer Dosiermembranpumpe kann die Membran beispielsweise hydraulisch angetrieben werden, sodass der Aktor einen entsprechenden Kolben umfasst, dessen eine Fläche mit dem Hydraulikfluid in Kontakt steht.

Alternativ kann die Membran auch magnetisch angetrieben werden. Beispielsweise kann die Membran mit einer Schubstange fest verbunden sein, die in einem im Pumpengehäuse fest verankerten Magnetmantel in der Längsachse axial beweglich gelagert ist, sodass die Schubstange und damit die Membran bei der elektrischen Ansteuerung einer Magnetspule in den Magnetmantel gegen die Wirkung einer Druckfeder in die Bohrung des Magnetmantels hinein gezogen wird und die Schubstange nach Deaktivierung des Magneten durch die Druckfeder in die Ausgangslage zurückkehrt, sodass die Membran bei fortgesetzter Aktivierung und Deaktivierung der Magnetspule eine oszillierende Bewegung durchführt. In diesem Fall ist die Magnetspule als Aktor anzusehen.

Bei Verfahren zur Herstellung einer wässrigen Lösung eines Reaktionsprodukts aus mindestens zwei Stoffen werden solche Dosiereinrichtungen parallel geschaltet, sodass die Stoffe nahezu zeitgleich einem Mischbehälter zugeführt werden. Die Vermischung der Stoffe erfolgt durch die Dosierhübe der Dosiereinrichtung. Ein solches Verfahren wird beispielsweise in einer Chlordioxidanlage verwirklicht, bei der Natriumchlorit ($NaClO_2$) mit Salzsäure (HCl) gemäß nachfolgender Reaktionsgleichung umgesetzt werden:

$$5\ NaClO_2 + 4\ HCl \rightarrow 4ClO_2 + 5\ NaCl + 2H_2O$$

Die entstehende wässrige Lösung des Reaktionsprodukts Chlordioxid kann bei der kommunalen Trink- und Abwasseraufbereitung sowie in industriellen Anwendungen zur Wasserdesinfektion oder der Oxidation von Wasserinhaltsstoffen eingesetzt werden.

Bei diesen Anwendungen kann es allerdings bei Menge und "Qualität" des zu desinfizierenden Wassers zu Schwankungen kommen. Dies bedingt, dass die Zugabemenge an Chlordioxid kontinuierlich an den aktuellen Bedarf angepasst werden muss, da andernfalls das zu desinfizierende Wasser einen zu hohen Überschuss oder einen Unterschuss an Chlordioxid aufweisen kann.

Bei einer zu hohen Zugabe von Chlordioxid ist das Wasser für den menschlichen Gebrauch nicht mehr geeignet. Wird hingegen eine zu geringe Menge an Chlordioxid zugegeben, ist die Desinfektionswirkung und / oder die Oxidationswirkung eingeschränkt und eine ausreichende Wasserqualität kann nicht mehr gewährleistet werden.

Bei den bisher aus dem Stand der Technik bekannten Anlagen zum Mischen wässriger Lösungen erfolgt die Kontrolle der Dosierung der wässrigen Lösungen in der Regel durch eine außerhalb der Pumpe angeordnete Dosierüberwachung mit den Dosierhub erkennenden Schwebekörpern.

Solche Dosierüberwachungen registrieren, ob ein voreingestellter Schwellenwert einer zuzudosierenden Menge überschritten wird.

Die Bewegung des Verdrängerelementes erfolgt im Wesentlichen sinusförmig. Während eines Druckhubes $h_D$ bewegt sich das Verdrängerelement von der Auslenkung $S_A$ bis zur Auslenkung $S_E$. Während des sich daran anschließenden Saughubes $h_S$ wird der Verdränger von der Auslenkung $S_E$ zurück bis zur Auslenkung $S_A$ bewegt. Die Hubperiode H setzt sich aus dem Druckhub $h_D$ und dem Saughub $h_S$ zusammen.

Das Verdrängerelement wird jedoch in der Regel zwischen den Positionen maximaler Auslenkung $S_{max}$ und $S_{min}$ bewegt, um den Wirkungsgrad der Dosiereinrichtung möglichst hoch zu gestalten. Im Übrigen erfolgt die Hublängeneinstellung der Dosiereinrichtungen aus dem Stand der Technik manuell und ist daher deutlich aufwändiger, als die Veränderung der Frequenz, die über die Motorsteuerung geregelt werden kann.

US 2005 / 0 008 554 A1 beschreibt eine Vorrichtung, die zur Herstellung von Chlordioxid verwendet werden kann, indem sie drei oder mehr Vorläuferchemikalien oder -verbindungen zu einem Reaktionsmedium, wie beispielsweise einem Wasserstrom, transportiert, um dort ein Reaktionsprodukt herzustellen. Die Vorrichtung ermöglicht ein proportionales Zuführen der einzelnen Vorläuferchemikalien bei verschiedenen Wasserflüssen.

DE 202005013090 U1 betrifft eine Dosierpumpe mit rotierendem Antriebsmotor und oszillierendem Verdränger, bei der die Drehbewegung eines Antriebsmotors durch eine als Getriebe wirkende Anordnung in eine oszillierende Bewegung einer Schubstange umgesetzt wird, so dass ein durch diese betätigtes Verdrängungsorgan bei fortlaufend rotierendem Antriebsmotor eine oszillierende Linearbewegung durchführt, die in einem in der Längsachse der Schubstange angeordneten Dosierkopf in Zusammenwirken mit einem Auslass- und Einlassventil in abwechselnder Folge zu einem Pumphub (Druckhub) und einem Ansaughub und damit zu einer Förderung des Dosiermediums führt, wobei mit der Schubstange ein Bezugselement verbunden ist, dessen Position von einem Positionssensor abgetastet wird, der nach einem berührungsfreien Prinzip arbeitet.

DE 102006060578 A1 betrifft ein Verfahren und eine Vorrichtung zur Erzeugung und Eindosierung von Chlordioxid in eine Wasserleitung, insbesondere eine Trinkwasserleitung. Dabei werden eine erste wässrige Lösung mit einem ersten Reaktionsstoff in einem ersten Behälter und eine zweite wässrige Lösung mit einem zweiten Reaktionsstoff in einem zweiten Behälter bereitgestellt und in einem Reaktionsbehälter zusammengebracht, infolgedessen durch die Reaktion des ersten und des zweiten Reaktionsstoffes eine wässrige Chlordioxid-Lösung gebildet wird. Das Zusammenbringen der ersten und zweiten wässrigen Lösung in dem Reaktionsbehälter erfolgt durch eine Dosiereinrichtung, welche die erste und zweite wässrige Lösung aus dem ersten und dem zweiten Behälter in den Reaktionsbehälter fördert. Die Erfindung ist dadurch gekennzeichnet, dass die wässrige Chlordioxidlösung unter Wirkung eines durch die Dosiereinrichtung erzeugten Überdrucks aus dem Reaktionsbehälter über eine Dosierleitung in die Wasserleitung gefördert wird.

Die Änderung der Frequenz kann jedoch zu einer ungleichmäßigen zeitlichen Verteilung der Dosierungen der verschiedenen wässrigen Lösungen und damit zu einer schlechteren Durchmischung führen. Darüber hinaus weisen Dosiereinrichtungen bei gleichen Hublängen fertigungsbedingt in der Regel nicht die gleichen Hubvolumina auf. Das hieraus resultierende Problem unterschiedlicher Dosiermengen kann mit den Anlagen aus dem Stand der Technik nur dadurch gelöst werden, dass die Dosiereinrichtungen bei unterschiedlichen Frequenzen gefahren werden, oder die Hublänge manuell nachjustiert wird.

Vor diesem Hintergrund ist es Aufgabe der Erfindung ein Verfahren zum Mischen wässriger Lösungen bereitzustellen, das eine bessere Vermischung der verschiedenen wässrigen Lösungen im Mischbehälter sowie eine bessere Anpassung der Dosierungsmengen ermöglicht.

Diese Aufgabe wird durch das Verfahren gemäß Anspruch 1 gelöst. Dieses umfasst die Schritte A) bis D), die im Folgenden näher erläutert werden. Diese werden in einer bevorzugten Ausführungsform der Erfindung in der alphabetischen Reihenfolge durchgeführt.

Schritt A)

In Schritt A) werden mindestens zwei wässrige Lösungen bereitgestellt. Unter wässriger Lösung wird erfindungsgemäß das homogene Gemisch eines Stoffes im Lösemittel Wasser verstanden, wobei das Lösemittel Wasser bis zu 25 Gew-% an weiteren polaren Lösemitteln, wie beispielsweise Alkoholen oder Ethern, aufweisen kann. Die mindestens zwei wässrigen Lösungen werden in getrennten Vorratsbehältern bereitgestellt. Sofern die wässrigen Lösungen Stoffe aufweisen, die miteinander reagieren können, ist dies mit dem Vorteil verbunden, dass durch die Trennung eine Reaktion der Stoffe vor der Einleitung in den Mischbehälter vermieden werden kann. Wenn mehr als zwei wässrigen Lösungen bereitgestellt werden, können durchaus mehrere wässrige Lösungen in dem gleichen Vorratsbehälter bereitgestellt werden, sofern diese keine Stoffe aufweisen, die unter den Bedingungen im Vorratsbehälter miteinander reagieren.

Schritt B)

In Schritt B) erfolgt das Einleiten der wässrigen Lösungen in einen Mischbehälter, sodass eine Mischung der wässrigen Lösungen entsteht. Unter Mischbehälter wird erfindungsgemäß jedes offene und geschlossene Behältnis verstanden, in das die wässrigen Lösungen eingeleitet werden können. In einer bevorzugten Ausführungsform der Erfindung handelt es sich um ein geschlossenes Behältnis. Das Einleiten der wässrigen Lösungen erfolgt durch jeweils mindestens eine Dosiereinrichtung, die mit einem der Vorratsbehälter verbunden ist. Die Dosiereinrichtungen können auch mit mehr als einem Vorratsbehälter verbunden sein und somit mehr als eine wässrige Lösung in den Mischbehälter einleiten, wobei vorzugsweise die in den wässrigen Lösungen enthaltenen Stoffe unter den Bedingungen der Einleitung nicht miteinander reagieren. Die Dosiereinrichtung weist nachfolgende Bauteile auf:

1) eine Dosierkammer mit einem Verdrängungselement, das derart beweglich angeordnet ist, dass es zwischen zwei Punkten maximaler Auslenkung $S_{max}$ und $S_{min}$, vorzugsweise stufenlos, hin- und her bewegbar ist, wobei das Volumen der Dosierkammer in der Position $S_{max}$ maximal und in der Position $S_{min}$ minimal ist und wobei der Abstand von $S_{max}$ und $S_{min}$ der maximalen Hublänge $H_{max}$ entspricht,

2) einen Aktor zum Antreiben des Verdrängungselementes, welcher einen Aktoreingang für ein elektrisches Ansteuersignal aufweist und derart aufgebaut ist, dass ein am Aktoreingang anliegendes elektrisches Ansteuersignal in eine mechanische Bewegung umgesetzt wird,

Das Einleiten der Lösungen durch die Dosiereinrichtungen erfolgt dadurch, dass das Verdrängungselement eine oszillierende Bewegung zwischen zwei Positionen $S_A$ und $S_E$ innerhalb des Bereiches von $S_{max}$ und $S_{min}$ vollzieht, sodass die wässrigen Lösungen aus dem Vorratsbehälter durch einen Saughub $h_s$ in die Dosierkammer gesaugt und im Anschluss durch einen Druckhub $h_D$ in den Mischbehälter gedrückt werden, wobei der Abstand $H_{A-E}$ der beiden Positionen $S_A$ und $S_E$ kleiner oder gleich der maximalen Hublänge $H_{max}$ ist.

Um eine optimale Vermischung der wässrigen Lösungen im Mischbehälter zu ermöglichen, weist dieser in einer bevorzugten Ausführungsform der Erfindung einen Strömungsbrecher auf, d.h. ein innerhalb des Mischbehälters angeordnetes Bauteil, das die Turbulenzen in der strömenden Flüssigkeiten erhöht. In einer besonders bevorzugten Ausführungsform ist der Strömungsbrecher eine Lochplatte.

Schritt C)

In Schritt C) kann die Bestimmung der eingeleiteten Mengen der wässrigen Lösungen durch eine Dosierüberwachung erfolgen. In einer Ausführungsform der Erfindung ist die Dosierüberwachung außerhalb der Dosiereinrichtung angeordnet. Dies hat den Vorteil, dass diese bei einer Fehlfunktion leicht gewechselt bzw. repariert werden kann.

In einer bevorzugten Ausführungsform der Erfindung ist die Dosierüberwachung innerhalb der Dosiereinrichtung angeordnet. Dies hat den Vorteil, dass kein separates Bauteil in der Anlage integriert werden muss. Die Dosierüberwachung kann beispielsweise dadurch erfolgen, dass eine Motorbetriebsgröße, wie die Motorspannung $U$ oder ein Motorstrom $I$ gemessen wird, hieraus und gegebenenfalls weiteren bekannten Motorcharakteristiken eine Regelgröße berechnet wird, und die zumindest eine Regelgröße mit einer vorbestimmten Führungsgröße verglichen wird. Ein solches Verfahren wird beispielsweise in der WO 2011/117 199 A1 beschrieben.

In einer besonders bevorzugten Ausführungsform der Erfindung wird die mindestens eine Dosiereinrichtung mit einem Antriebsmotor mit einer vom Motor angetriebenen Welle angetrieben und die eingeleitete Menge der wässrigen Lösungen wird durch eine innerhalb der Dosiereinrichtung angeordneten Dosierüberwachung wie oben beschrieben berechnet, wobei die Regelgröße das Drehmoment $M_{Ist}$ und gegebenenfalls der magnetischen Fluss $\Phi_{Ist}$ des Motors ist.

Die Dosierüberwachung ist vorzugsweise derart ausgebildet, dass aus dem von ihr erhaltenen Messwert die von der Dosiereinrichtung in den Mischbehälter eingeleitete Menge der wässrigen Lösungen ermittelt werden kann. Dies kann beispielsweise durch einen Durchflussmesser erfolgen. Vorzugsweise erfolgt eine Dosierüberwachung über Messung einer Motorbetriebsgröße wie oben dargestellt.

Die Bestimmung des Abstands $H_{A-E}$ der beiden Positionen $S_A$ und $S_E$, d.h. der Hublänge, erfolgt durch eine Hublängenregelung. Dies kann beispielsweise durch Erfassen der Position des Verdrängungselementes mit Hilfe eines Hall-Sensors erfolgen. Die Bestimmung des Abstands $H_{A-E}$ kann auch aus einer eine Motorbetriebsgröße und gegebenenfalls weiteren bekannten Motorcharakteristiken erfolgen.

Die von den Dosierüberwachungen ermittelten Messgrößen werden in ein Signal, das vorzugsweise elektrisch ist, umgesetzt und dieses Messsignal an die Hublängenregelung übermittelt.

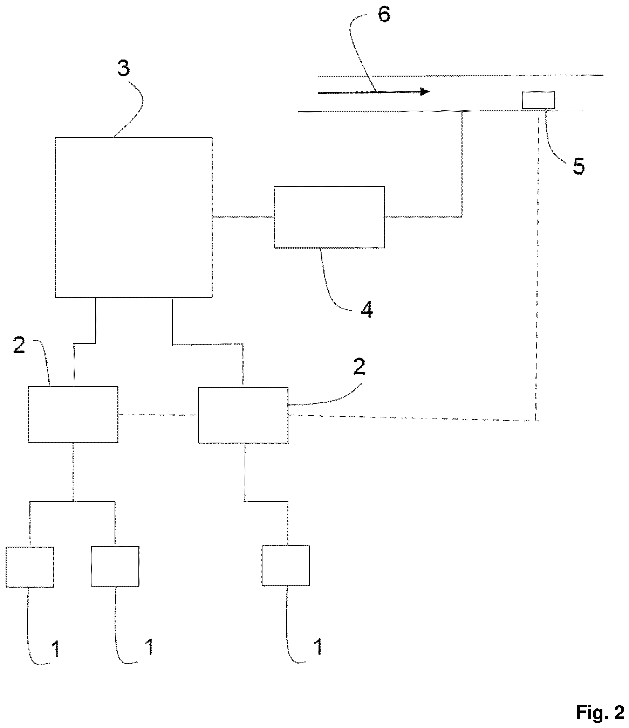

Alternativ oder zusätzlich zur Bestimmung der eingeleiteten Mengen der wässrigen Lösungen durch eine Dosierüberwachung wird im Mischbehälter oder vorzugsweise nach Ausleiten aus dem Mischbehälter, eine physikalische und/oder chemische Messgröße der Mischung der wässrigen Lösungen mit Hilfe eines Sensors bestimmt. Sofern in einem unten beschriebenen optionalen Schritt E) ein Reaktionsprodukt gebildet wird, ist diese Messgröße vorzugsweise von der Konzentration des Reaktionsproduktes in der Mischung der wässrigen Lösungen abhängig. In einer besonders bevorzugten Ausführungsform ist der Sensor in einem Behältnis, beispielsweise einem offenen oder geschlossenen Gefäß oder einer Rohrleitung, insbesondere einer Wasserleitung, angeordnet, welches das mit der Mischung der Lösungen zu behandelnde Wasser enthält und in das die Mischung der wässrigen Lösungen ausgeleitet wird. Wenn der Sensor in diesem Behältnis angeordnet ist, kann die Dosierung in Abhängigkeit eines zu erreichenden Sollwertes einer physikalischen und/oder chemischen Messgröße erfolgen. Eine solche Ausführung wird beispielhaft in Fig. 2 gezeigt.

Die Messgröße wird in ein Signal umgewandelt, das vorzugsweise elektrisch ist, und an die Hublängenregelung übermittelt, sodass dieser Wert bei der Anpassung der Hublänge berücksichtigt wird.

In einer bevorzugten Ausführungsform der Erfindung passt die Hublängenregelung den Abstand $H_{A-E}$ derart an, dass der Ist-Wert der physikalischen und/oder chemischen Messgröße an einen vorgegebenen Sollwert angenähert wird.

Die wässrige Lösung kann nach Ausleiten und vor Bestimmung der physikalischen und/oder chemischen Messgröße weiter verdünnt werden. Dies muss bei der Bestimmung der Messgröße entsprechend berücksichtigt werden.

Der Sensor kann beispielsweise ein amperometrischer oder ein optischer Sensor, beispielsweise ein UV-Vis-Sensor, sein.

Schritt D)

Die in C) bestimmten Messgrößen werden an die mindestens eine Hublängenregelung übermittelt und die Hublängenregelung passt die Bewegung des Aktors und damit den Abstand $H_{A-E}$ mindestens einer Dosiereinrichtung in Abhängigkeit von den von der Dosierüberwachung bereitgestellten Messgrößen, nämlich der Mengen der wässrigen Lösungen, an. Unter Bereitstellen einer Messgröße wird erfindungsgemäß verstanden, dass eine Dosierüberwachung oder ein Sensor die jeweilige Messgröße in ein Signal, das vorzugsweise elektrisch ist, umsetzt und dieses Signal an die Hublängenregelung übermittelt. Die Hublängenregelung verwertet diese Messgröße(n), berechnet anhand vorgegebener oder berechneter Soll-Werte eine Soll-Hublänge und stellt ein elektrisches Ansteuersignal für den Aktor bereit, sodass die Hublänge an die Soll-Hublänge angepasst wird.

Schritt E)

In einer bevorzugten Ausführungsform der Erfindung wird das Verfahren zur Erzeugung eines Reaktionsproduktes genutzt. Hierzu erfolgt in Schritt E) die Umsetzung von mindestens zwei in den wässrigen Lösungen enthaltenen Stoffen im Mischbehälter, sodass ein Reaktionsprodukt entsteht, das vorzugsweise als wässrige Lösung vorliegt.

Für diesen Fall ist vorzugsweise die ggf. in Schritt C) bestimmte Messgröße des Sensors von der Konzentration des gebildeten Reaktionsproduktes abhängig.

Schritt F)

In einer bevorzugten Ausführungsform der Erfindung wird Mischung, die durch Einleiten der mindestens zwei wässrigen Lösungen entstanden ist, aus dem Mischbehälter wieder ausgeleitet. Dies kann allein durch den von den Dosiereinrichtungen beim Einleiten der wässrigen Lösungen erzeugten Überdruck erfolgen. In einer weiteren Ausführungsform weist die Anlage eine zusätzliche Dosiereinrichtung auf, um das Ausleiten zu ermöglichen bzw. zu erleichtern. In einer besonders bevorzugten Ausführungsform ist dem Schritt F) der Schritt E) vorgeschaltet, sodass die ausgeleitete Mischung der wässrigen Lösungen ein Reaktionsprodukt aufweist.

In einer bevorzugten Ausführungsform der Erfindung werden die Schritte A)-F) in der alphabetischen durchgeführt.

In einer bevorzugten Ausführungsform der Erfindung ist die Hublängenregelung in einer der Dosiereinrichtungen angeordnet in, d.h. innerhalb des Gehäuses. Dies ist mit dem Vorteil verbunden, dass die Anlage konstruktiv einfach gehalten werden kann und keine weiteren Bauteile notwendig sind.

Vorzugsweise weist die Anlage zur Durchführung des Verfahrens jeweils eine Dosierüberwachung für jede Dosiereinrichtung auf, wobei diese besonders bevorzugt innerhalb der Dosiereinrichtung, d.h. innerhalb deren Gehäuses, angeordnet ist. Dies ist mit dem Vorteil verbunden, dass die Anlage konstruktiv einfach gehalten werden kann und keine weiteren Bauteile notwendig sind.

Vorzugsweise weist die Anlage zur Durchführung des Verfahrens jeweils eine Hublängenregelung für jede Dosiereinrichtung auf, wobei diese besonders bevorzugt innerhalb der Dosiereinrichtung, d.h. innerhalb deren Gehäuses, angeordnet ist. Dies ist mit dem Vorteil verbunden, dass die Anlage konstruktiv einfach gehalten werden kann und keine weiteren Bauteile notwendig sind.

Vorzugsweise weist die Anlage zur Durchführung des Verfahrens jeweils eine Dosierüberwachung und eine Hublängenregelung für jede Dosiereinrichtung auf, wobei diese besonders bevorzugt innerhalb der Dosiereinrichtung, d.h. innerhalb deren Gehäuses, angeordnet ist. Dies ist mit dem Vorteil verbunden, dass die Anlage konstruktiv einfach gehalten werden kann und keine weiteren Bauteile notwendig sind.

In einer bevorzugten Ausführungsform der Erfindung ist die Dosiereinrichtung eine Membranpumpe, vorzugsweise eine Magnetmembranpumpe.

Da die Dosiermengen der wässrigen Lösungen mit dem erfindungsgemäßen Verfahren über die Hublängenregelung gesteuert werden können, kann die Hubfrequenz im Wesentlichen gleich gehalten werden. Hierdurch wird eine zeitlich gleichmäßige Verteilung der Dosierhübe und damit eine noch bessere Durchmischung der wässrigen Lösungen ermöglicht.

In einer bevorzugten Ausführungsform der Erfindung ist die Dauer einer Hubperiode bestehend aus einem Saughub $h_s$ und einem Druckhub $h_D$ für aufeinanderfolgende Hubperioden im Wesentlichen gleich, wobei im Wesentlichen gleich bedeutet, dass die Zeitdifferenz zweier aufeinanderfolgender Hubperioden geteilt durch die Zeitdauer der längsten Periode ≤ 0,2, vorzugsweise ≤ 0,15, noch bevorzugter ≤ 0,10 und am bevorzugtesten ≤ 0,05 bedeutet.

In einer bevorzugten Ausführungsform der Erfindung ist der Abstand $H_{A-E}$ :5 0,5 $H_{Max}$. Die Einstellung einer Hublänge, die wesentlich kleiner als die maximale Hublänge ist, ist in der Regel bei Dosiereinrichtungen nicht gewünscht, da ein maximaler Wirkungsgrad der Dosiereinrichtung nur bei Ausnutzung des maximalen Hubs $H_{max}$ möglich ist.

Die Erfinder haben jedoch herausgefunden, dass bei der Dosierung mehrerer wässriger Lösungen in einen Mischbehälter, es vorteilhaft ist, die Hublänge möglichst gering zu halten und dafür die Hubfrequenz, d.h. den Kehrwert der Hubdauer, möglichst hoch zu halten. Hierdurch erfolgt eine höhere Zahl von Dosierungen kleinerer Mengen der wässrigen Lösungen in den Mischbehälter, wodurch eine bessere Verteilung der wässrigen Lösungen im Mischbehälter erzielt wird. Sofern die wässrigen Lösungen Stoffe enthalten, die im Mischbehälter miteinander reagieren, kann somit eine gleichmäßigere Umsetzung erzielt werden.

In einer bevorzugten Ausführungsform der Erfindung wird das Verfahren zur Herstellung eines Reaktionsproduktes aus in den wässrigen Lösungen enthaltenen Stoffen genutzt. In diesem Fall ist es besonders bevorzugt, dass die Abstände $H_{A-E}$ von der Hublängenregelung so eingestellt werden, dass die Stoffmengen aller in den Mischbehälter eingeleiteten Stoffe zur Herstellung des Reaktionsprodukts im Wesentlichen gleich sind, wobei im Wesentlichen gleich bedeutet, dass die Stoffmengenabweichung geteilt durch die größte Stoffmenge der wässrigen Lösung ≤ 0,2 ist, vorzugsweise von ≤ 0,15, noch bevorzugter ≤ 0,10 und am bevorzugtesten ≤ 0,05 bedeutet.

Unter Berücksichtigung der Stöchiometrie bedeutet erfindungsgemäß, dass die Stoffmengen der mit der wässrigen Lösung eingeleiteten Stoffe mit dem Kehrwert des Stöchiometriekoeffizienten der Reaktion zu multiplizieren sind. Dies wird nachfolgend anhand eines Beispiels erläutert. Die Herstellung von $ClO_2$ erfolgt aus $NaClO_2$ und HCl gemäß nachfolgender Reaktionsgleichung:

$$5\ NaClO_2 + 4HCl \rightarrow 4\ ClO_2 + 5\ NaCl + 2H_2O$$

Beim Vergleich der Stoffmengen ist zu berücksichtigen, dass 5 mol $NaClO_2$ mit nur 4 mol HCl reagieren, die Stoffmengen sind daher entsprechend mit dem Kehrwert des Stöchiometriekoeffizienten der Reaktion zu multiplizieren:

$$n_{rel,NaClO2} = \frac{n(NaClO_2)}{5}\ , n_{rel,HCl} = \frac{n(HCl)}{4}$$

wobei n die Stoffmenge ist, die aus dem Volumen an eingeleiteter wässriger Lösung und der Konzentration des Stoffes in dieser Lösung bestimmt werden kann.

Die Stoffmengen sind erfindungsgemäß im Wesentlichen gleich, wenn die Differenz dieser "relativen" Stoffmengen $n_{rel,NaClO2}$ und $n_{rel,HCl}$ geteilt durch die größte relative Stoffmenge von $n_{rel,NaClO2}$ und $n_{rel,HCl} \le 0,2$ ist, vorzugsweise ≤ 0,15, noch bevorzugter ≤ 0,10 und am bevorzugtesten ≤ 0,05.

In einer bevorzugten Ausführungsform der Erfindung sind Anfang und/oder Ende der Hubperiode bestehend aus einem Saughub $h_s$ und einem Druckhub $h_D$ für alle Dosiereinrichtungen im Wesentlichen gleich, wobei im Wesentlichen gleich bedeutet, dass die Zeitabweichung geteilt durch die Zeitdauer der längsten Periode ≤ 0,2 ist, vorzugsweise von ≤ 0,15 noch bevorzugter ≤ 0,10 und am bevorzugtesten ≤ 0,05 ist.

Die Synchronisation hat den Vorteil, dass die wässrigen Lösungen nahezu vollständig zeitgleich eingeleitet werden, sodass eine optimale Vermischung und Umsetzung gewährleistet werden kann. Vorzugsweise werden die Hubperioden entsprechend synchronisiert und die Abstände $H_{A-E}$ von den Hublängenregelungen so eingestellt, dass die eingeleiteten Stoffmengen unter Berücksichtigung der Stöchiometrie im Wesentlichen gleich sind. Hierdurch wird die Vermischung der wässrigen Lösungen und ggf. Umsetzung der darin enthaltenen Stoffe noch weiter verbessert und vermieden, dass nicht umgesetzte Stoffe in der wässrigen Lösung des Reaktionsproduktes vorhanden sind.

Allerdings sind auch Anwendungen denkbar, bei denen der Beginn und/oder das Ende der Hubperiode der Einrichtungen versetzt sein sollen, beispielsweise um unterschiedliche Weglängen zum Mischbehälter zu kompensieren.

In einer bevorzugten Ausführungsform der Erfindung wird die Mischung der wässrigen Lösungen nach Ausleiten aus dem Mischbehälter durch einen zusätzlichen Mischer geleitet. Unter Mischer ist jedes Bauteil zu verstehen, dass die Durchmischung weiter verbessert. Hierunter fallen beispielsweise Rührer. Der zusätzliche Mischer kann in einer Ausführungsform der Erfindung innerhalb des Mischbehälters angeordnet sein. In einer anderen bevorzugten Ausführungsform ist der zusätzliche Mischer außerhalb des Mischbehälters angeordnet. In einer solchen Anordnung kann der zusätzliche Mischer bei einer Fehlfunktion leicht gewechselt bzw. repariert werden. Sofern die Anlage einen Sensor zum Erfassen einer physikalischen und/oder chemischen Messgröße der Mischung der wässrigen Lösungen aufweist, erfolgt die Vermischung vorzugsweise bevor die Mischung der Lösungen den Sensor passiert. Hierdurch ist die dort erhaltene physikalische und/oder chemische Messgröße noch aussagekräftiger.

Bevorzugt wird das erfindungsgemäße Verfahren zur Herstellung des Reaktionsprodukts Chlordioxid eingesetzt, wobei die in den wässrigen Lösungen getrennt enthaltenen Stoffe Salzsäure und Natriumchlorit sind. Die entstehende Lösung des Reaktionsprodukts Chlordioxid kann zur Desinfizierung von Wasser eingesetzt werden. Das erfindungsgemäße Verfahren hat den Vorteil, dass Salzsäure und Natriumchlorit besonders effizient miteinander vermischt werden, sodass nur geringe Mengen von Salzsäure und Natriumchlorit in der wässrigen Lösung des Reaktionsproduktes vorhanden sind. Da wässrige Lösungen von Chlordioxid zum Desinfizieren von Wasser verwendet werden, sind die Mengen von Salzsäure und Natriumchlorit entsprechend gering zu halten.

Die vorliegende Erfindung betrifft ebenfalls eine Anlage zur Durchführung des Verfahrens, die aufweist

a) mindestens zwei getrennte Vorratsbehälter aus denen die mindestens zwei wässrige Lösungen mit Hilfe von jeweils mindestens einer Dosiereinrichtung gefördert werden können,

b) mindestens einen Mischbehälter, mit mindestens zwei Eingängen über die die mindestens zwei wässrige Lösungen mit Hilfe der Dosiereinrichtungen eingeleitet werden können, und einem Ausgang, aus dem die Mischung der wässrigen Lösungen ausgeleitet werden kann,

c) mindestens zwei Dosiereinrichtungen, die folgende Bauteile aufweisen

1) eine Dosierkammer mit einem Verdrängungselement, das derart beweglich angeordnet ist, dass es zwischen zwei Punkten maximaler Auslenkung $S_{max}$ und $S_{min}$ stufenlos hin- und her bewegbar ist, wobei das Volumen der Dosierkammer in der Position $S_{max}$ maximal und in der Position $S_{min}$ minimal ist und wobei der Abstand von $S_{max}$ und $S_{min}$ der maximalen Hublänge $H_{max}$ entspricht,
2) einen Aktor zum Antreiben des Verdrängungselementes, welcher einen Aktoreingang für ein elektrisches Ansteuersignal aufweist und derart aufgebaut ist, dass ein am Aktoreingang anliegendes elektrisches Ansteuersignal in eine mechanische Bewegung umgesetzt wird,

d) mindestens eine Dosierüberwachung, mit der die Menge der in den Mischbehälter eingeleiteten wässrigen Lösung bestimmt werden kann, und die vorzugsweise in einer der Dosiereinrichtung angeordnet ist,

e) mindestens eine Hublängenregelung, die das von der Dosierüberwachung und ggf. dem Sensor bereitgestellte elektrische Messsignal empfangen und in ein elektrisches Ansteuersignal für den Aktoreingang mindestens einer Dosiereinrichtung umwandeln kann, wobei die mindestens eine Hublängenregelung vorzugsweise in einer Dosiereinrichtung angeordnet ist,

wobei die Anlage vorzugsweise aufweist:

f) mindestens einen Sensor zur Erfassung einer physikalischen und/oder chemischen Messgröße der wässrigen Lösung. Das Erfassen der Messgröße kann im Mischbehälter, vorzugsweise jedoch nach Ausleiten aus dem Mischbehälter erfolgen. In einer bevorzugten Ausführungsform der Erfindung wird das Verfahren zum Herstellung eines Reaktionsproduktes aus in den wässrigen Lösungen enthaltenen Stoffen genutzt. In diesem Fall ist es besonders bevorzugt, dass die die physikalische und/oder chemische Messgröße von der Konzentration des Reaktionsproduktes abhängig ist.

Der Sensor weist einen Sensorausgang für ein elektrische Messsignal auf und ist derart ausgebildet, dass er die physikalische und/oder chemische Messgröße erfasst, in ein elektrisches Messsignal umsetzt und dieses am Sensorausgang zur Verfügung stellt, welches an die Hublängenregelung übermittelt werden kann, sodass die Hublängenüberwachung dieses empfängt.

In einer bevorzugten Ausführungsform der Erfindung weist die Anlage zusätzlich einen Mischer auf, mit dessen Hilfe die aus dem Mischbehälter ausgeleitete Mischung der wässrigen Lösungen nochmals intensiv vermischt werden kann.

In einer weiteren bevorzugten Ausführungsform der Erfindung weist die Anlage zusätzlich eine Dosiereinrichtung auf, mit deren Hilfe die aus dem Mischbehälter ausgeleitete Mischung der wässrigen Lösungen mit Wasser vermischt werden kann.

Die vorliegende Erfindung betrifft ebenfalls die Verwendung von Dosiereinrichtungen mit integrierter Dosierüberwachung und Hublängenregelung in einer Anlage zum Mischen wässriger Lösungen. Integriert bedeutet im erfindungsgemäßen Zusammenhang, dass die Dosierüberwachung und Hublängenregelung innerhalb der Dosiereinrichtung, d.h. innerhalb deren Gehäuses, angeordnet sind. In einer bevorzugten Ausführungsform weist jede Dosiereinrichtung der Anlage eine integrierte Dosierüberwachung und Hublängenregelung auf.

FIGURENBESCHREIBUNG

Bezugszeichenliste

1 Vorratsbehälter
2 Dosiereinrichtung
3 Mischbehälter
4 Zusätzlicher Mischer
5 Sensor
6 Hauptwasserleitung

Kurzbeschreibung der Figuren

Fig. 1 zeigt eine Ausführungsform der erfindungsgemäßen Anlage.
Fig. 2 zeigt eine weitere Ausführungsform der erfindungsgemäßen Anlage.

Ausführliche Beschreibung der Figuren

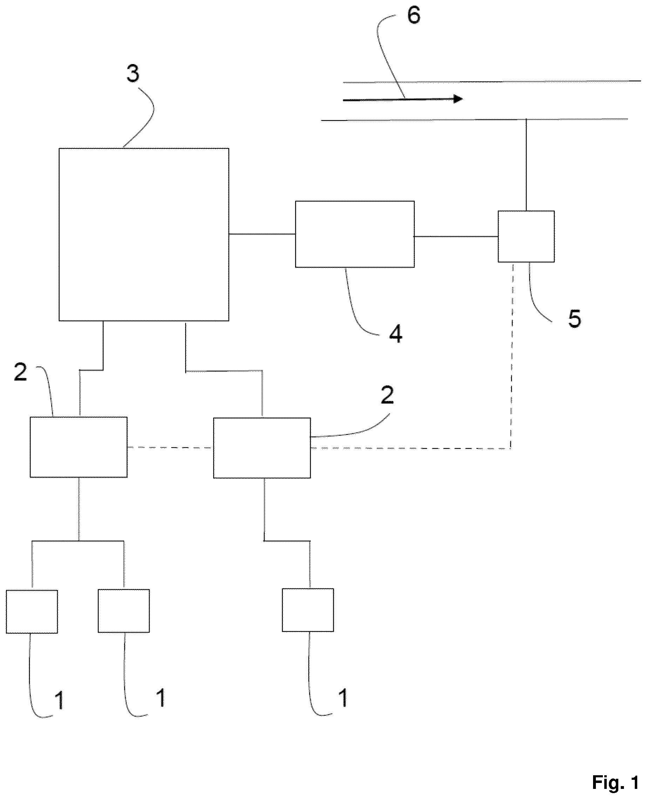

Die in Fig.1 gezeigte Ausführungsform der erfindungsgemäßen Anlage weist drei Vorratsbehälter 1 auf, die jeweils eine wässrige Lösung enthalten. Die wässrigen Lösungen werden durch die Dosiereinrichtungen 2 mit integrierter Dosierüberwachung und Hublängenregelung dem Mischbehälter 3 zugeführt und nach Ausleiten aus dem Mischbehälter 3 in einem zusätzlichen Mischer 4 nochmals intensiv vermischt. Bevor die Mischung der Hauptwasserleitung zugeführt wird, durchläuft diese den Sensor 5, der eine physikalische und/oder chemische Messgröße erfasst und an die Hublängenregelungen der Dosiereinrichtungen über ein elektrisches Signal (gestrichen dargestellt) übermittelt. Diese passen in der Folge den Abstand $H_{A-E}$ in Abhängigkeit dieser Messgrößen an.
Die in Fig.2 gezeigte Ausführungsform der erfindungsgemäßen Anlage weist drei Vorratsbehälter 1 auf, die jeweils eine wässrige Lösung enthalten. Die wässrigen Lösungen werden durch die Dosiereinrichtungen 2 mit integrierter Dosierüberwachung und Hublängenregelung dem Mischbehälter 3 zugeführt und nach Ausleiten aus dem Mischbehälter 3 in einem zusätzlichen Mischer 4 nochmals intensiv vermischt. Der Sensor 5, der eine physikalische und/oder chemische Messgröße erfasst und an die Hublängenregelungen der Dosiereinrichtungen über ein elektrisches Signal (gestrichen dargestellt) übermittelt, ist in der Hauptwasserleitung in Strömungsrichtung nach der Zudosierungsstelle angeordnet. Die Hublängenregelungen passen in der Folge den Abstand $H_{A-E}$ in Abhängigkeit der physikalischen und/oder chemischen Messgröße an. Hierdurch kann die zudosierte Menge in Abhängigkeit dieser Messgröße gesteuert werden.

**Patentansprüche**

1. **Verfahren** zum Mischen wässriger Lösungen, das folgende Schritte aufweist:

   **A)** Bereitstellen von wässrigen Lösungen in mindestens zwei getrennten Vorratsbehältern (1),
   **B)** Einleiten der wässrigen Lösungen in einen Mischbehälter (3) durch jeweils mindestens eine Dosiereinrichtung (2), sodass eine Mischung der wässrigen Lösungen entsteht, wobei die Dosiereinrichtung (2) die nachfolgenden Bauteile aufweist:

   1) eine Dosierkammer mit einem Verdrängungselement, das derart beweglich angeordnet ist, dass es zwischen zwei Punkten maximaler Auslenkung $S_{max}$ und $S_{min}$ hin- und her bewegbar ist, wobei das Volumen der Dosierkammer in der Position $S_{max}$ maximal und in der Position $S_{min}$ minimal ist und wobei der Abstand von $S_{max}$ und $S_{min}$ einer maximalen Hublänge $H_{max}$ entspricht,
   2) einen Aktor zum Antreiben des Verdrängungselementes, welcher einen Aktoreingang für ein elektrisches Ansteuersignal aufweist und derart aufgebaut ist, dass ein am Aktoreingang anliegendes elektrisches Ansteuersignal in eine mechanische Bewegung umgesetzt wird,

wobei das Einleiten dadurch erfolgt, dass das Verdrängungselement eine oszillierende Bewegung zwischen zwei Positionen $S_A$ und $S_E$ innerhalb des Bereiches von $S_{max}$ und $S_{min}$ vollzieht, sodass die wässrige Lösung aus dem Vorratsbehälter (1) durch einen Saughub $h_s$ in die Dosierkammer gesaugt und im Anschluss durch einen Druckhub $h_D$ in den Mischbehälter (3) gedrückt werden, wobei der Abstand $H_{A-E}$ der beiden Positionen $S_A$ und $S_E$ kleiner oder gleich der maximalen Hublänge $H_{max}$ ist,

**C)** Bestimmen der in den Mischbehälter (3) eingeleiteten Mengen der wässrigen Lösungen durch Dosierüberwachungen und/oder Erfassen einer physikalischen und/oder chemischen Messgröße der Mischung der wässrigen Lösungen durch einen Sensor (5)

**dadurch gekennzeichnet, dass**

**D)** die in C) bestimmten Messgrößen an mindestens eine Hublängenregelung übermittelt werden und die Hublängenregelung die Bewegung des Aktors und damit den Abstand $H_{A-E}$ mindestens einer Dosiereinrichtung (2) in Abhängigkeit dieser Messgrößen anpasst, wobei die Hubfrequenz im Wesentlichen gleich gehalten wird.

2. **Verfahren** nach Anspruch 1, **dadurch gekennzeichnet, dass** das Verfahren nachfolgenden zusätzlichen Schritt aufweist:
**E)** Umsetzen von in den wässrigen Lösungen enthaltenen Stoffen im Mischbehälter (3), sodass ein Reaktionsprodukt entsteht.

3. **Verfahren** nach Anspruch 1 oder 2, **dadurch gekennzeichnet, dass** das Verfahren nachfolgenden zusätzlichen Schritt aufweist:
**F)** Ausleiten der Mischung der wässrigen Lösungen aus dem Mischbehälter (3).

4. **Verfahren** nach einem der vorausgehenden Ansprüche, **dadurch gekennzeichnet, dass** jede Dosiereinrichtung (2) jeweils eine Dosierüberwachung und/oder eine Hublängenregelung aufweist, die vorzugsweise in der Dosiereinrichtung (2) angeordnet ist.

5. **Verfahren** nach einem der vorausgehenden Ansprüche, **dadurch gekennzeichnet, dass** die Dosiereinrichtung (2) eine Membranpumpe, vorzugsweise eine Magnetmembranpumpe ist.

6. **Verfahren** nach einem der vorausgehenden Ansprüche, **dadurch gekennzeichnet, dass** die Dauer einer Hubperiode bestehend aus einem Saughub $h_s$ und einem Druckhub $h_D$ für aufeinanderfolgende Hubperioden im Wesentlichen gleich ist, wobei im Wesentlichen gleich bedeutet, dass die Zeitabweichung geteilt durch die Zeitdauer der längsten Periode $\leq 0{,}2$ ist.

7. **Verfahren** nach einem der vorausgehenden Ansprüche, **dadurch gekennzeichnet, dass** der Abstand $H_{A-E} \leq 0{,}5$ $H_{Max}$ ist.

8. **Verfahren** nach Ansprüchen 2-7, **dadurch gekennzeichnet, dass** die Abstände $H_{A-E}$ der einzelnen Dosiereinrichtungen (2) so eingestellt werden, dass die Stoffmengen aller in den Mischbehälter (3) eingeleiteten Stoffe zur Herstellung des Reaktionsprodukts unter Berücksichtigung der Stöchiometrie im Wesentlichen gleich sind, wobei im Wesentlichen gleich bedeutet, dass die Stoffmengenabweichung geteilt durch die größte Stoffmenge $\leq 0{,}2$ ist.

9. **Verfahren** nach einem der vorausgehenden Ansprüche, **dadurch gekennzeichnet, dass** der Beginn und das Ende einer Hubperiode bestehend aus einem Saughub $h_s$ und einem Druckhub $h_D$ für mindestens zwei Dosiereinrichtungen (2) im Wesentlichen gleich ist, wobei im Wesentlichen gleich bedeutet, dass die Zeitabweichung geteilt durch die Zeitdauer der längsten Periode $\leq 0{,}2$ ist.

10. **Verfahren** nach einem der vorausgehenden Ansprüche, **dadurch gekennzeichnet, dass** die Mischung der wässrigen Lösungen nach Ausleiten aus dem Mischbehälter (3) durch einen zusätzlichen Mischer (4) geleitet wird, wobei dies vorzugsweise vor Schritt G) erfolgt.

11. **Verfahren** nach einem der vorausgehenden Ansprüche, **dadurch gekennzeichnet, dass** die in den wässrigen Lösungen enthaltenen Stoffe Salzsäure und Natriumchlorit sind.

12. **Anlage** eingerichtet zur Durchführung des Verfahrens nach einem der vorausgehenden Ansprüche, die folgende Bauteile aufweist:

a) mindestens zwei getrennte Vorratsbehälter aus denen die mindestens zwei wässrigen Lösungen mit Hilfe von jeweils mindestens einer Dosiereinrichtung (2) gefördert werden können,

b) mindestens einen Mischbehälter (3), mit mindestens zwei Eingängen über die die mindestens zwei wässrigen Lösungen mit Hilfe der Dosiereinrichtungen (2) eingeleitet werden können und einem Ausgang, aus dem die Mischung der wässrigen Lösungen ausgeleitet werden kann,

c) mindestens zwei Dosiereinrichtungen (2), die jeweils folgende Bauteile aufweisen:

1) eine Dosierkammer mit einem Verdrängungselement, das derart beweglich angeordnet ist, dass es zwischen zwei Punkten maximaler Auslenkung $S_{max}$ und $S_{min}$ stufenlos hin- und her bewegbar ist, wobei das Volumen der Dosierkammer in der Position $S_{max}$ maximal und in der Position $S_{min}$ minimal ist und wobei der Abstand von $S_{max}$ und $S_{min}$ der maximalen Hublänge $H_{max}$ entspricht,

2) einen Aktor zum Antreiben des Verdrängungselementes, welcher einen Aktoreingang für ein elektrisches Ansteuersignal aufweist und derart aufgebaut ist, dass ein am Aktoreingang anliegendes elektrisches Ansteuersignal in eine mechanische Bewegung umgesetzt wird,

d) mindestens eine Dosierüberwachung, mit der die Menge der in den Mischbehälter (3) eingeleiteten wässrigen Lösung bestimmt werden kann, und die vorzugsweise in einer der Dosiereinrichtung (2) angeordnet ist,

e) mindestens eine Hublängenregelung, die das von der Dosierüberwachung und ggf. dem Sensor (5) bereitgestellte elektrische Messsignal empfangen und in ein elektrisches Ansteuersignal für den Aktoreingang mindestens einer Dosiereinrichtung (2) umwandeln kann, wobei die mindestens eine Hublängenregelung vorzugsweise in einer Dosiereinrichtung (2) angeordnet ist,

wobei die Anlage vorzugsweise aufweist:

f) mindestens einen Sensor (5) zur Erfassung einer physikalischen und/oder chemischen Messgröße der Mischung der wässrigen Lösungen, der einen Sensorausgang für ein elektrische Messsignal aufweist und der derart ausgebildet ist, dass er die physikalische und/oder chemische Messgröße erfasst, in ein elektrisches Messsignal umsetzt und dieses am Sensorausgang zur Verfügung stellt, sodass die Hublängenüberwachung dieses empfangen kann.

13. **Anlage** nach Anspruch 12, **dadurch gekennzeichnet, dass** diese zusätzlich einen Mischer (4) aufweist.

14. **Anlage** nach einem der Ansprüche 12 oder 13, **dadurch gekennzeichnet, dass** diese zusätzlich eine Dosiereinrichtung (2) aufweist, mit deren Hilfe die aus dem Mischbehälter (3) ausgeleitete Mischung der wässrigen Lösungen mit Wasser vermischt werden kann.

15. **Verwendung** von Dosiereinrichtungen (2) mit integrierter Dosierüberwachung und Hublängenregelung in einer Anlage zum Mischen wässriger Lösungen nach einem der Ansprüche 12 - 14.

**Claims**

1. A method of mixing aqueous solutions, which has the following steps:

A) providing aqueous solutions in at least two separate storage containers (1),

B) introducing the aqueous solutions into a mixing container (3) by at least one respective dosing device (2) so that a mixture of the aqueous solutions is produced, wherein the dosing device (2) has the following components:

1) a dosing chamber having a displacement element which is arranged moveably in such a way that it is reciprocable between two points of maximum deflection $S_{max}$ and $S_{min}$, wherein the volume of the dosing chamber in the position $S_{max}$ is at a maximum and in the position $S_{min}$ is at a minimum and wherein the spacing of $S_{max}$ and $S_{min}$ corresponds to a maximum stroke length $H_{max}$,

2) an actuator for driving the displacement element which has an actuator input for an electrical actuation signal and is so constructed that an electrical actuation signal at the actuator input is converted into a mechanical movement,

wherein introduction is effected by the displacement element performing an oscillating movement between two positions $S_A$ and $S_E$ within the range of $S_{max}$ and $S_{min}$ so that the aqueous solution is sucked out of the storage container (1) into the dosing chamber by a suction stroke $h_S$ and is then pushed into the mixing container (3) by a pressure stroke $h_D$, wherein the spacing $H_{A-E}$ of the two positions $S_A$ and $S_E$ is less than or equal to the

maximum stroke length $H_{max}$,

C) determining the amounts of the aqueous solutions introduced into the mixing container (3) by dosing monitoring means and/or detecting a physical and/or chemical measurement value of the mixture of the aqueous solutions by a sensor (5),

**characterised in that**

D) the measurement values determined in C) are communicated to at least one stroke length closed-loop control and the stroke length closed-loop control adapts the movement of the actuator and thus the spacing $H_{A-E}$ of at least one dosing device (2) in dependence on said measurement values, the stroke frequency being kept substantially identical.

2. A method as set forth in claim 1 **characterised in that** the method has the following additional step:
E) reacting substances contained in the aqueous solutions in the mixing container (3) so that a reaction product is produced.

3. A method as set forth in claim 1 or claim 2 **characterised in that** the method has the following additional step:
F) discharging the mixture of the aqueous solutions from the mixing container (3).

4. A method as set forth in one of the preceding claims **characterised in that** each dosing device (2) respectively has a dosing monitoring means and/or a stroke length control which is preferably arranged in the dosing device (2).

5. A method as set forth in one of the preceding claims **characterised in that** the dosing device (2) is a diaphragm pump, preferably a magnetic diaphragm pump.

6. A method as set forth in one of the preceding claims **characterised in that** the duration of a stroke period comprising a suction stroke $h_S$ and a pressure stroke $h_D$ is substantially the same for successive stroke periods, wherein substantially the same means that the time deviation divided by the duration of the longest period is $\leq 0.2$.

7. A method as set forth in one of the preceding claims, **characterised in that** the spacing $H_{A-E}$ is $\leq 0.5\ H_{Max}$.

8. A method as set forth in claims 2-7 **characterised in that** the spacings $H_{A-E}$ of the individual dosing devices (2) are so adjusted that the amounts of all substances introduced into the mixing container (3) for production of the reaction product are substantially the same having regard to stoichiometry, wherein substantially the same means that the deviation in the amounts of substances divided by the largest amount of substance is $\leq 0.2$.

9. A method as set forth in one of the preceding claims **characterised in that** the start and the end of a stroke period comprising a suction stroke $h_S$ and a pressure stroke $h_D$ is substantially the same for at least two dosing devices (2), wherein substantially the same means that the time deviation divided by the duration of the longest period is $\leq 0.2$.

10. A method as set forth in one of the preceding claims **characterised in that** the mixture of the aqueous solutions is passed through an additional mixer (4) after discharge from the mixing container (3), wherein that is preferably effected prior to step G).

11. A method as set forth in one of the preceding claims **characterised in that** the substances contained in the aqueous solutions are hydrochloric acid and sodium chlorite.

12. An installation arranged for carrying out a method as set forth in one of the preceding claims which has the following components:

a) at least two separate storage containers, from which the at least two aqueous solutions can be delivered by means of respectively at least one dosing device (2),
b) at least one mixing container (3) having at least two inlets by way of which the at least two aqueous solutions can be introduced by means of the dosing devices (2) and an outlet from which the mixture of the aqueous solutions can be discharged,
c) at least two dosing devices (2) having the following components:

1) a dosing chamber having a displacement element arranged moveably in such a way that it is, preferably steplessly, reciprocable between two points of maximum deflection $S_{max}$ and $S_{min}$, wherein the volume of the dosing chamber in the position $S_{max}$ is at a maximum and in the position $S_{min}$ is at a minimum and wherein the spacing of $S_{max}$ and $S_{min}$ corresponds to the maximum stroke length $H_{max}$, and

2) an actuator for driving the displacement element which has an actuator input for an electrical actuation signal and is so constructed that an electrical actuation signal at the actuator input is converted into a mechanical movement,

d) at least one dosing monitoring means with which the amount of the aqueous solution introduced into the mixing container (3) can be determined and which is preferably arranged in one of the dosing devices (2),
e) at least one stroke length closed-loop control which can receive the electrical measurement signal provided by the dosing monitoring means and optionally the sensor (5) and convert it into an electrical actuation signal for the actuator input of at least one dosing device (2), wherein the at least one stroke length closed-loop control is preferably arranged in a dosing device (2),

wherein the installation preferably has:
f) at least one sensor (5) for detecting a physical and/or chemical measurement value of the mixture of the aqueous solutions, which has a sensor output for an electrical measurement signal and is of such a configuration that it detects the physical and/or chemical measurement value, converts it into an electrical measurement signal and makes same available at the sensor output, so that the stroke length monitoring can receive same.

13. An installation as set forth in claim 12 **characterised in that** it additionally has a mixer (4).

14. An installation as set forth in one of claims 12 or 13 **characterised in that** it additionally has a dosing device (2), by means of which the mixture of the aqueous solutions, that is discharged from the mixing container (3), can be mixed with water.

15. Use of dosing devices (2) with integrated dosing monitoring and stroke length control in an installation for mixing aqueous solutions as set forth in one of claims 12 -14.


**Revendications**

1. Procédé pour mélanger des solutions aqueuses qui comprend les étapes suivantes :

A) mettre à disposition des solutions aqueuses dans au moins deux réservoirs (1) séparés,
B) introduire les solutions aqueuses dans une cuve de mélange (3) en les faisant passer par au moins un dispositif de dosage (2) respectif de façon qu'un mélange des solutions aqueuses soit obtenu, le dispositif de mélange (2) comprenant les composants suivants :

1) une chambre de dosage avec un élément de déplacement qui est disposé de façon mobile de telle manière qu'il puisse être déplacé en aller-retour entre deux points de déviation maximale $S_{max}$ et $S_{min}$, le volume de la chambre de dosage étant maximal dans la position $S_{max}$ et minimal dans la position $S_{min}$ et la distance entre $S_{max}$ et $S_{min}$ correspondant à une longueur de course maximale $H_{max}$,
2) un actionneur pour entraîner l'élément de déplacement, qui comprend une entrée d'actionneur pour un signal de commande électrique et qui est conçu de façon qu'un signal électrique présent à l'entrée d'actionneur soit transformé en un mouvement mécanique,

l'introduction se faisant par le fait que l'élément de déplacement effectue un mouvement d'oscillation entre deux positions $S_A$ et $S_E$ dans la plage de $S_{max}$ et $S_{min}$ de façon telle que la solution aqueuse du réservoir (1) soit aspirée par une course d'aspiration $h_S$ et fait entrer dans la chambre de dosage et soit ensuite poussée dans la cuve de mélange par une course de pression $h_D$, la distance $H_{A-E}$ entre les deux positions $S_A$ et $S_E$ étant inférieure ou égale à la longueur de course maximale $H_{max}$,
C) déterminer, par des dispositifs de surveillance de dosage, les quantités des solutions aqueuses introduites dans la cuve de mélange (3) et/ou saisir, par un capteur (5), une valeur de mesure physique et/ou chimique du mélange des solutions aqueuses,

**caractérisé en ce que**
D) les valeurs de mesure déterminées à C) sont transmises à au moins un dispositif de réglage de longueur de course et que le dispositif de réglage de longueur de course adapte le mouvement de l'actionneur, et ainsi la distance

$H_{A-E}$ d'au moins un dispositif de dosage (2), en fonction de ces valeurs de mesure, la fréquence de course étant maintenue essentiellement constante.

2. Procédé selon la revendication 1, **caractérisé en ce que** le procédé comprend l'étape supplémentaire suivante :
E) transformer des matières contenues dans les solutions aqueuses dans la cuve de mélange (3) si bien qu'un produit de réaction se forme.

3. Procédé selon la revendication 1 ou 2, **caractérisé en ce que** le procédé comprend l'étape supplémentaire suivante :
F) évacuer le mélange des solutions aqueuses de la cuve de mélange (3).

4. Procédé selon l'une des revendications précédentes, **caractérisé en ce que** chaque dispositif de dosage (2) comprend respectivement un dispositif de surveillance de dosage et/ou un dispositif de réglage de longueur de course qui est de préférence disposé dans le dispositif de dosage (2).

5. Procédé selon l'une des revendications précédentes, **caractérisé en ce que** le dispositif de dosage (2) est une pompe à membrane, de préférence une pompe à membrane magnétique.

6. Procédé selon l'une des revendications précédentes, **caractérisé en ce que** la durée d'une période de course se composant d'une course d'aspiration $h_S$ et d'une course de pression $h_D$ est essentiellement la même pour des périodes de courses se succédant, essentiellement la même signifiant que l'écart de temps divisé par la durée de la période la plus longue est de $\leq 0,2$.

7. Procédé selon l'une des revendications précédentes, **caractérisé en ce que** la distance $H_{A-E}$ est < 0,5 $H_{Max}$.

8. Procédé selon les revendications 2 à 7, **caractérisé en ce que** les espaces $H_{A-E}$ des différents dispositifs de dosage (2) sont réglés de manière telle que les quantités de matière de toutes les matières introduites dans les cuves de mélange (3) pour la fabrication du produit réactif sont essentiellement les mêmes en tenant compte de la stoechiométrie, essentiellement les mêmes signifiant que l'écart de la quantité de matière divisé par la plus grande quantité de matière est $\leq 0,2$.

9. Procédé selon l'une des revendications précédentes, **caractérisé en ce que** le début et la fin d'une période de course se composant d'une course d'aspiration $h_S$ et d'une course de pression $h_D$ est essentiellement le (la) même pour au moins deux dispositifs de dosage (2), essentiellement le (la) même signifiant que l'écart de temps divisé par la durée de la période la plus longue est de $\leq 0,2$.

10. Procédé selon l'une des revendications précédentes, **caractérisé en ce que** le mélange des solutions aqueuses, après l'évacuation de la cuve de mélange (3), est conduit à travers un mélangeur (4) supplémentaire, ceci étant effectué de préférence avant l'étape G).

11. Procédé selon l'une des revendications précédentes, **caractérisé en ce que** les matières contenus dans les solutions aqueuses sont de l'acide chlorhydrique et du chlorite de sodium.

12. Installation agencée pour la mise en oeuvre du procédé selon l'une des revendications précédentes, qui comprend les composants suivants :

a) au moins deux réservoirs séparés à partir desquels lesdites au moins deux solutions aqueuses peuvent être transportées à l'aide d'au moins un dispositif de dosage (2),
b) au moins une cuve de mélange (3) avec au moins deux entrées par lesquelles lesdites au moins deux solutions aqueuses peuvent être introduites à l'aide des dispositifs de dosage (2) et une sortie par laquelle le mélange des solutions aqueuses peut être évacué,
c) au moins deux dispositifs de dosage (2) qui comprennent chacun les composants suivants :

1) une chambre de dosage avec un élément de déplacement qui est disposé de façon mobile de telle manière qu'il puisse être déplacé en aller-retour entre deux points de déviation maximale $S_{max}$ et $S_{min}$, le volume de la chambre de dosage étant maximal dans la position $S_{max}$ et minimal dans la position $S_{min}$ et la distance entre $S_{max}$ et $S_{min}$ correspondant à une longueur de course maximale $H_{max}$,
2) un actionneur pour entraîner l'élément de déplacement, qui comprend une entrée d'actionneur pour un signal de commande électrique et qui est conçu de façon qu'un signal électrique présent à l'entrée d'actionneur soit transformé en un mouvement mécanique,

d) au moins un dispositif de surveillance de dosage à l'aide duquel la quantité de solution aqueuse introduite dans le réservoir de mélange (3) peut être déterminée et qui est disposé, de préférence, dans un des dispositifs de dosage (2),
e) au moins un dispositif de réglage de longueur de course qui peut recevoir le signal de mesure mis à disposition par le dispositif de surveillance de dosage et, le cas échéant, par le capteur (5) et qui peut le transformer en un signal de commande électrique pour l'entrée de l'actionneur d'au moins un dispositif de dosage (2), ledit au moins un dispositif de réglage de longueur de course étant disposé, de préférence, dans un des dispositifs de dosage (2),

l'installation comprenant de préférence :
f) au moins un capteur (5) pour saisir une valeur de mesure physique et/ou chimique du mélange des solutions aqueuses, qui comprend une sortie de capteur pour un signal de mesure électrique et qui est configuré de façon qu'il saisisse la valeur de mesure physique et/ou chimique, la transforme en un signal de mesure électrique et mette celui-ci à disposition à la sortie de capteur afin que le dispositif de surveillance de longueur de course puisse le recevoir.

13. Installation selon la revendication 12, **caractérisé en ce qu'**elle comprend en plus un mélangeur (4).

14. Installation selon l'une des revendications 12 ou 13, **caractérisé en ce qu'**elle comprend en plus un dispositif de dosage (2) à l'aide duquel le mélange des solutions aqueuses évacué de la cuve de mélange (3) peut être mélangé à de l'eau.

15. Utilisation de dispositifs de dosage (2) avec une surveillance de dosage intégrée et un dispositif de réglage de longueur de course dans une installation pour mélanger des solutions aqueuses selon l'une des revendications 12 à 14.

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050008554 A1
- DE 202005013090 U1
- DE 102006060578 A1
- WO 2011117199 A1